# EUROPEAN PATENT SPECIFICATION

(11) **EP 2 662 197 B1**
(45) Date of publication and mention of the grant of the patent: **03.09.2014**
(21) Application number: 13165127.5
(22) Date of filing: 24.04.2013
(51) Int. Cl.: B29C 47/90, B29C 47/00

(54) **Guide device for extruded tubular plastic films integrating a mobile system of fumes filtering**
Führungsvorrichtung für extrudierte schlauchförmige Kunststofffolien umfassend ein mobiles System zur Dampffilterung
Dispositif de guidage pour films plastiques tubulaires extrudés intégrant un système mobile de filtration des fumées

(30) Priority: 07.05.2012 IT MI20120767
(43) Date of publication of application: 13.11.2013
(73) Proprietor: Sanplast Di Santoro Raimondo, 21052 Busto Arsizio (VA) (IT)
(72) Inventor: Santoro, Raimondo, 21052 Busto Arsizio (Varese) (IT)
(74) Representative: Petruzziello, Aldo

(56) References cited:
- EP-A2- 1 967 350
- EP-A2- 1 982 819
- FR-A1- 2 123 173
- FR-A1- 2 172 299
- US-A- 5 441 395
- US-A1- 2005 285 315

## Description

The present invention relates to a device (hereinafter referred to as "bubble guide") for guiding, during the phase of cooling, a tubular film of an extruded plastic material, which integrates a mobile system of multi-point fumes filtering.

More particularly, in a device defined above the filtering of the fumes takes place in several points around the bubble of extruded film and it is simultaneous to the aspiration of the same fumes in directions substantially tangential to said bubble.

In plants for the production of tubular films the film is extruded as a bubble and guided upwards, during the phase of cooling, using a support known as "bubble guide".

The bubble guide is placed above the zone of the bubble extruded film wherein the plastic material crystallises and where the sensors for checking the bubble of extruded film are normally placed.

In order to support and guide the film in the passage from the plastic state to the crystalline solid state this bubble guide provides a system of cage roller assemblies, normally made up of a set of horizontal segments placed on several planes (guide levels) and in a position tangent to the bubble of extruded film created with the blowing technique.

The cage is made up of members, attached to an external support, which move towards the centre by means of a mechanical system of lever mechanisms, with a radial or angular movement (iris system; the lever mechanisms are pivoted to the support and move towards the centre along an arc of a circle) which has the purpose of varying, as a function of the diameter of the bubble of extruded film, the diameter of the opening defined by the rollers in order to maintain the constant support of the bubble itself.

An example of bubble guide with radial movement is constituted by the device described in the Italian patent application MI2007A000449 and in EP-A-1 967 350, which discloses the preamble of claim 1, in the name of the Applicant.

During the extrusion of the film produced by blowing or as a bubble, extrusion vapours are released which can create dense fumes, in particular when the extruded film contains slip agents such as paraffin or other olefins as in the case of the increasingly widespread films based on corn or potatoes starch.

This causes serious problems of management and of observance of the regulations of safety in the workplace. In fact, since the fumes which form during the extrusion can be very oily, they thicken easily, creating a sort of slippery "honey" which is deposited on any colder surrounding surface.

To this end, fume disposal systems are provided in the art which provide for the use of extractor hoods, placed outside the film at the sides of the bubble guide, which aspirate the vapours in radial direction and provide downstream of these hoods a central filtering system for the fumes conveyed into the extractor hoods.

However these systems of aspiration can lack efficiency when the film is regulated to smaller diameters since there is excessive distancing of the bubble of said film from the extractor hood.

If in order to avoid this problem the aspiration is increased there is the risk of disturbing the process of film consolidation. In fact if the fumes system is not dimensioned correctly excessive aspiration of the vapours in this radial direction may determine an alteration of the bubble diameter in its portions closer to the aspiration with evident damage to the product.

Moreover, for these aspiration systems, a bulky system of fumes filtering has to be provided, in particular when the air flows in the aspiration are considerable, with obvious difficulties of maintenance as well as a waste of time in the cleaning of the filters of the filtering system.

The object of the present invention is that of overcoming, at least in part, the disadvantages of the prior art by providing a system of aspiration and filtering of fumes in a bubble guide which is efficient for any diameter of a bubble film.

Another object is that of providing such a system of aspiration and filtering which avoids possible alterations of the bubble diameter along the axis of said bubble.

A further object is that of providing such a system of aspiration and filtering which is also easy and fast to maintain and which requires work which is not overly repetitive.

These objects are achieved by a "bubble guide" which integrates a mobile system of multi-point fumes filtering with respective aspiration in accordance with the invention having the features listed in the appended independent claim 1.

Advantageous embodiments of the invention are disclosed by the dependent claims.

An object of the present invention relates to a bubble guide for tubular plastic films comprising a supporting structure, to be mounted around the bubble of extruded film, whereto one end of a plurality of mobile arms is hinged whose second end, held in contact with the bubble of extruded film, carries means of guiding the bubble.

Each mobile arm is made up of an articulated quadrilateral and comprises, preferably, at least one quadrangular body (square or rectangular) having one side hinged "flap-like" to the supporting structure, a tie rod having one end hinged to the supporting structure and a member which carries the guide means, said member being hinged to the other end of the tie rod and to the side of the quadrangular body opposite that hinged to the supporting structure.

This device is **characterised in that** it is moreover provided with a plurality of filtering columns, which are integral with said cage (here also referred to as guide rack) and placed in parallel one to the other, where each column is attached rigidly to the guide means (roller assembly) placed on each quadrangular body of each mobile arm.

Each filtering column is in turn provided with a plurality of horizontal aspirating members, tubular in shape (cannulas) and in communication with said column, which are distributed on several levels and placed in such a way as to be, in a plan view, rotated through an acute or obtuse angle with respect to the guide means: in this way it is possible to filter the fumes in a punctiform manner in the area around the bubble, aspirating at the same time said fumes in directions substantially tangential or nearly to the bubble of film and not in radial direction.

In this way a system of fumes filtering is created, integrated with the "bubble guide", where the zone placed under aspiration in order to convey these fumes into said filtering columns is diffused and uniform both horizontally and vertically.

This aspirating zone is well distributed around the bubble of the film thanks to the high number of aspirating members, so that it is possible to aspirate without violence and without disturbing the process of consolidation of the film responsible for the reaching of the preset bubble diameter.

Since the horizontal aspirating members and the relative filtering columns are mobile and move integrally with said mobile guide means (roller assembly) which support and guide the film, in the present system of filtering it is always possible to aspirate fumes efficiently also in the case of smaller bubble diameters, unlike what occurs in the known systems where the aspiration mouths are placed at a fairly remote distance from the mobile guide means (roller assembly).

All the filtering columns are then placed in parallel one to the other and connected to an aspiration collector which is in turn connected to an aspirator.

Moreover since each filtering column contains internally a respective removable vertical brush suitable for retaining the viscous fumes, the present system of filtering is easy and fast to maintain.

Further features of the invention will be made clearer by the following detailed description, referred to one of its embodiments purely by way of a non-limiting example illustrated in the accompanying drawings, wherein:
Figure 1 is a schematic perspective view, partially interrupted, of a first known bubble guide which carries one single mobile arm for simplicity of illustration;
Figure 2 is a schematic view from above of the bubble guide of the present invention, with only one of the mobile arms in various positions and with most of the guiding means of the bubble film illustrated in backward position without the respective mobile arm;
Figure 3 is an enlarged plan view of the detail denoted by A in Fig. 2;
Figure 4 is a front elevation view of a filtering column mounted on the known bubble guide of Fig. 1;
Figure 5 is an elevation and perspective view, partially interrupted, of a second known bubble guide whereon some filtering columns have been mounted in accordance with a preferred embodiment of the present invention;
Figure 5a is an enlarged view of the detail denoted by B in Fig. 5;

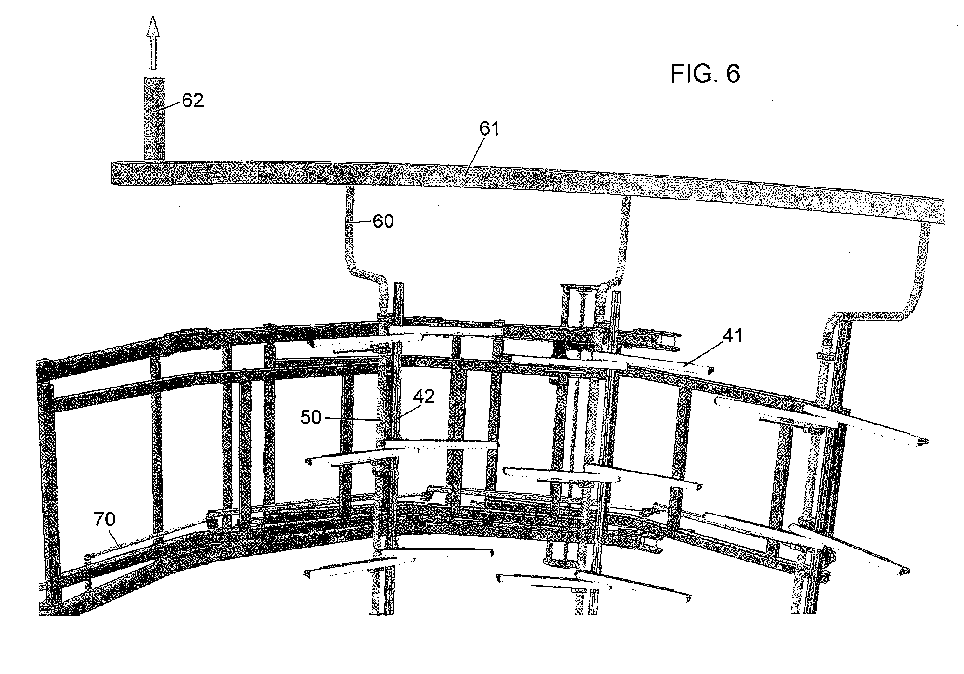

Figure 6 is an enlarged perspective view of Figure 5;
Figures 7 and 7a are, respectively, a side view and a view from above of the means suitable for moving vertically the bubble guide of Fig. 2.

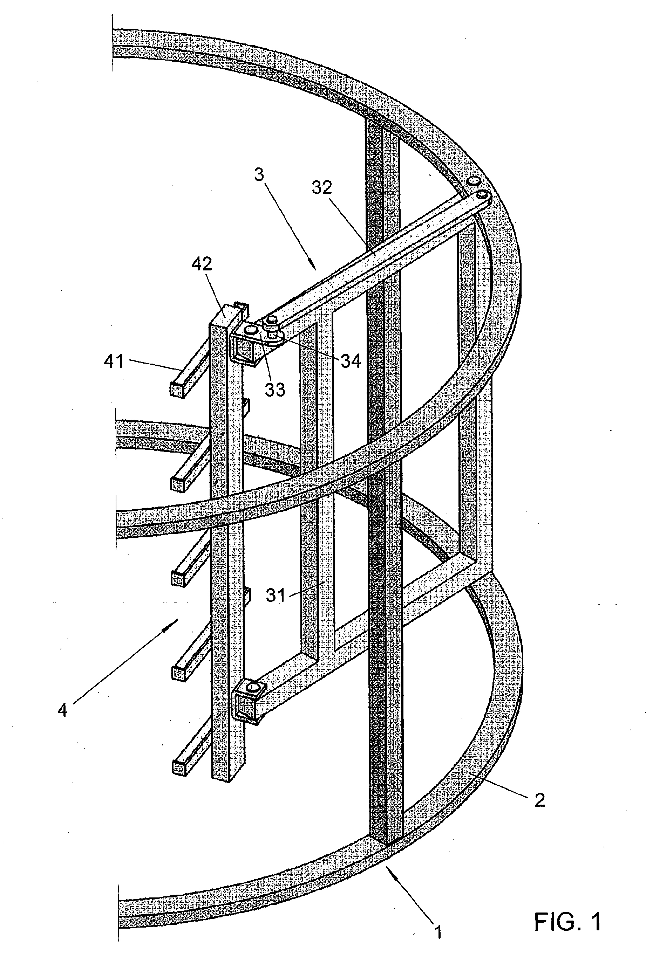

Figure 1 shows schematically a perspective and partially interrupted view of a known and preferred bubble guide 1 whereto the system of filtering is integrated in accordance with the invention.

Said bubble guide 1 is described in the Italian patent application MI2007A000449. For simplicity, said bubble guide 1 has been shown in Figure 1 equipped with a single mobile arm 3 which carries guide means 4, omitting the other mobile arms 3 in order to allow a clearer vision of the structure of the mobile arm 3.

The number of these mobile arms is not binding and depends substantially on the range of diameters of the film as a bubble for which a predetermined "bubble guide" can be used. In one example these mobile arms 3 can be six-nine-twelve.

As is known, each mobile arm 3 is made up of an articulated quadrilateral comprising a quadrangular (square or rectangular) body 31 having one side hinged "flap-like" to the supporting structure 2, also referred to here as guide rack, a tie rod 32 having one end hinged to the supporting structure 2 and a member 33 which carries the guide means 4 (by means of reversible attachment means, not illustrated as in themselves known). Said member 33 is hinged to the other end of the tie rod 32 and to the side of the quadrangular body 31 opposite that hinged to the supporting structure 2.

This member 33 therefore allows the connection of said guide means 4 to said tie rod 32 and to said quadrangular body 31.

The tie rod 32 is connected to the member 33 by means of a pin 34 (or another functionally equivalent connection means).

The quadrangular body 31 generally has a height corresponding to that of the supporting structure 2.

Advantageously the mobile arm 3 comprises means (not described here as in themselves known) suitable for varying the length of the tie rod 32 to allow a fine adjustment of the position of the guide means 4 with respect to the bubble of extruded film.

In the bubble guide 1 the guide means 4 are carried by the same flap-like body 31 and integral therewith so that their position is regulated simultaneously by moving the flap-like body 31.

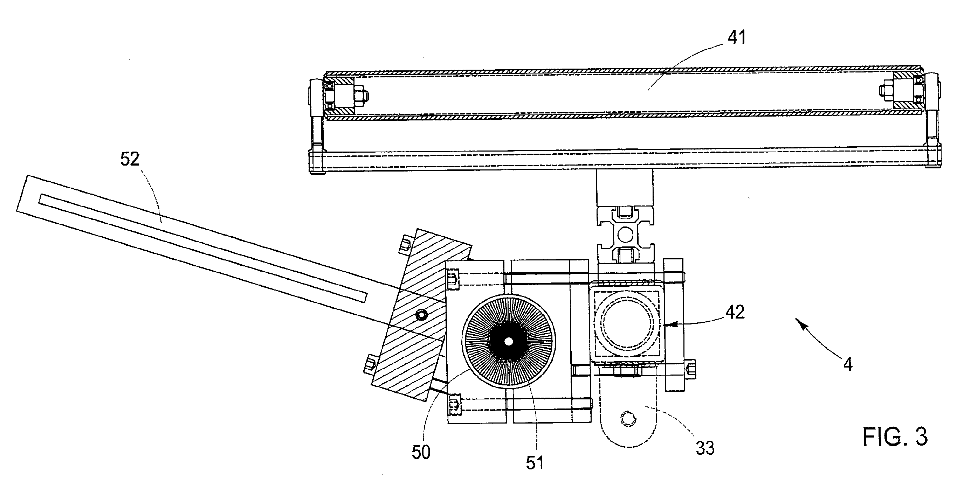

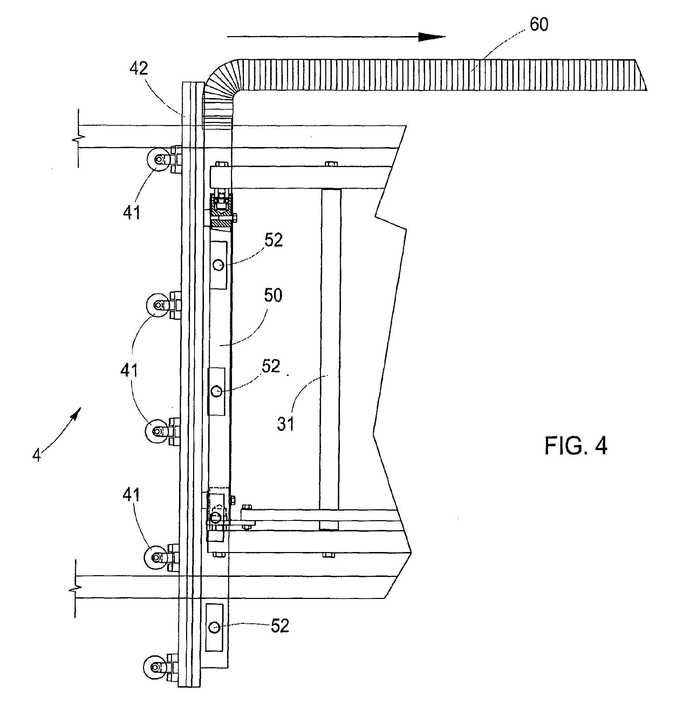

In one embodiment the guide means 4 are made up of a plurality of horizontal guide members 41 (Figs. 3-4), or rollers, mounted on a support 42, preferably in the form of rod, tube or section bar, suitable for being mounted by means of reversible means of attachment (in themselves known and omitted in the drawings for simplicity of graphic representation) to the flap-like body 31 of a mobile arm 3.

The guide means 4 are interchangeable and, thanks to the means of reversible attachment, replaceable simply and fast, allowing the most suitable guide members 41 (not described here as in themselves known) for the specific application to be used on each occasion.

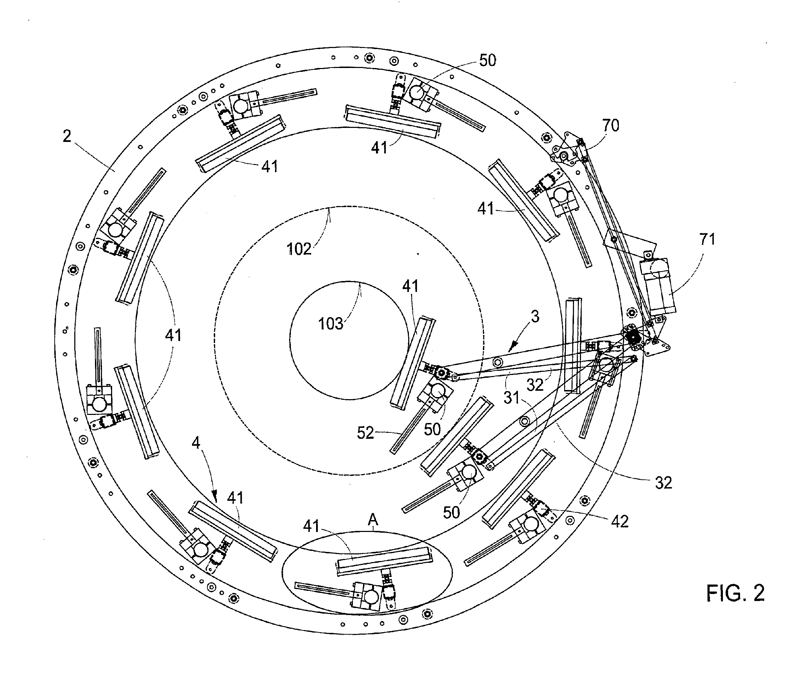

Figure 2 shows schematically a view from above of the bubble guide 1 of Figure 1, but integrated with the system of filtering in accordance with a preferred embodiment of the invention.

In said drawing this bubble guide 1 is shown with only one of the mobile arms 3 and the relative guide means 4 (for simplicity indicated in the drawing only by means of the guide member 41) in various positions corresponding to different diameters of the bubble of extruded film: Figure 2 shows schematically three bubbles having, respectively, the maximum diameter (bubble 101), the medium one (bubble 102) and the smallest one (bubble 103) which can be obtained for a bubble of extruded film guided by the aforesaid guide means 4.

It can be noted from Figure 2 that the mobile arm 3 moves the respective guide means 4 in such a way as to be always substantially parallel to them, maintaining them always tangent to the bubble of extruded film.

The mobile arms 3 are made to rotate simultaneously with respect to the supporting structure 2 by a lever mechanism comprising the rods 70 (Fig. 2) actuated by the means 71 not further described as with the possibility of realisation by a skilled person without having to carry out inventive activity.

As illustrated in Figs. 3-4, on each support 42 restrained to the respective quadrangular body 31 of each mobile arm 3 a vertical filtering column 50 is mounted, with preferably tubular shape, substantially of the same length as the support 42.

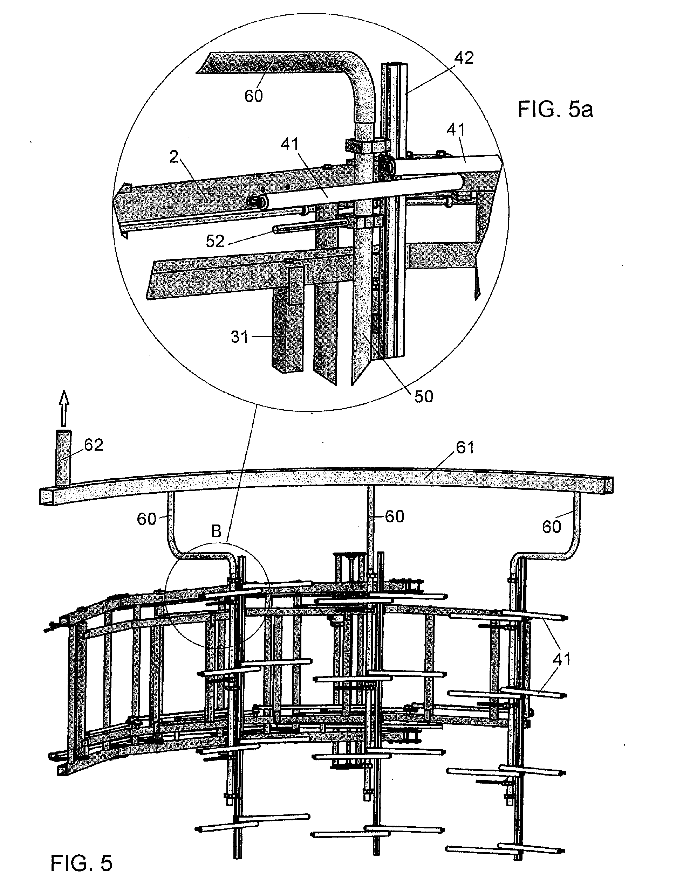

Said filtering column 50 is connected to a tube 60, preferably in the form of flexible tube, at one of its ends. This tube 60 flows into an aspiration collector, or collection ring, 61 (Fig. 5) in turn connected to an aspirator or to a group of aspirators (not illustrated in the drawing) by means of an outlet pipe 62, therefore placing this filtering column under aspiration.

At the other end, this filtering column 50 is closed by a cap or similar closure means (not illustrated in the drawing).

Each filtering column 50 is moreover provided with one or more apertures (or slits, not illustrated in the drawing), each one of which is in communication with one or more respective tubular aspiration members 52, preferably in cannula form, attached to said filtering column 50 (Fig. 5a).

In each vertical filtering column 50 said aspiration members 52 are arranged horizontally on several levels, similarly to the guide members 41, yet rotated through a certain angle (acute or obtuse) with respect to said guide members 41, so as to be, in a plan view, inclined through an acute or obtuse angle with respect to the guide members 41 as illustrated in Fig. 3.

This arrangement of said aspiration members 52, which remains such for any diameter of bubble, means that the fumes entry mouth of each aspiration member 52 is directed in a non-radial direction and substantially tangential or almost tangential with respect to the circumference of the extruded bubble. In this way the radial aspiration whereto known bubble films are subjected does not take place.

The section of the apertures of the aspiration members 52 on a same filtering column 50 can be the same or different, for example with a width equal to 5 mm, preferably different according to the level which the aspiration member 52 occupies on the filtering column 50.

More particularly it is preferable that the apertures (slits) of the aspiration members 52 placed further below are greater in that the fumes which are further down are more loaded with particulate and pollutants.

Inside each tubular filtering column 50 a helical brush 51 is provided, forcedly inserted therein, even if this is not binding. The bristles of these helical brushes 51 are suitable for acting as a barrier to the particulate present in the aspirated fumes: this will go to thicken in a percolate, then depositing on the base of the filtering column 50.

The maintenance of this filtering column 50 consists in removing the closing cap of the column, placed below or above, and in extracting the filtering brush 51 which may be washed or replaced. The use of these brushes 51 favours therefore a rapid cleaning and prevents deposits and incrustations.

Since the aspirator (not illustrated) downstream of the air outlet pipe 62 provides clean or almost clean air, it is preferable to provide one or more washable filters in input of the same: however their filtering function and their dimensions can be smaller with respect to those of filters used in known bubble guides in that most of the particulate is blocked mostly by the helical brushes 51. The aspirator or the aspirators can be provided with an anti-explosion system in the case where the fumes disposed of are flammable.

It should be noted that the present system of filtering can be integrated also on a bubble guide with radial functioning as described above yet intended for bubbles of larger diameter, for example like that illustrated in Figs. 5 and 5a, which provides at least two pluralities of guide members 41 for each support 42 and where for every level there are two guide members 41, or rollers, placed as a V.

It is understood that other known bubble guides can also be integrated with the present mobile system of fumes filtering.

As is known to persons skilled in the art, it is also important to be able to move vertically (i.e. parallel to the axis of the bubble of extruded film) the bubble guide in order to adapt its position to specific needs, leaving the zone where the extruded film crystallises as clear as possible.

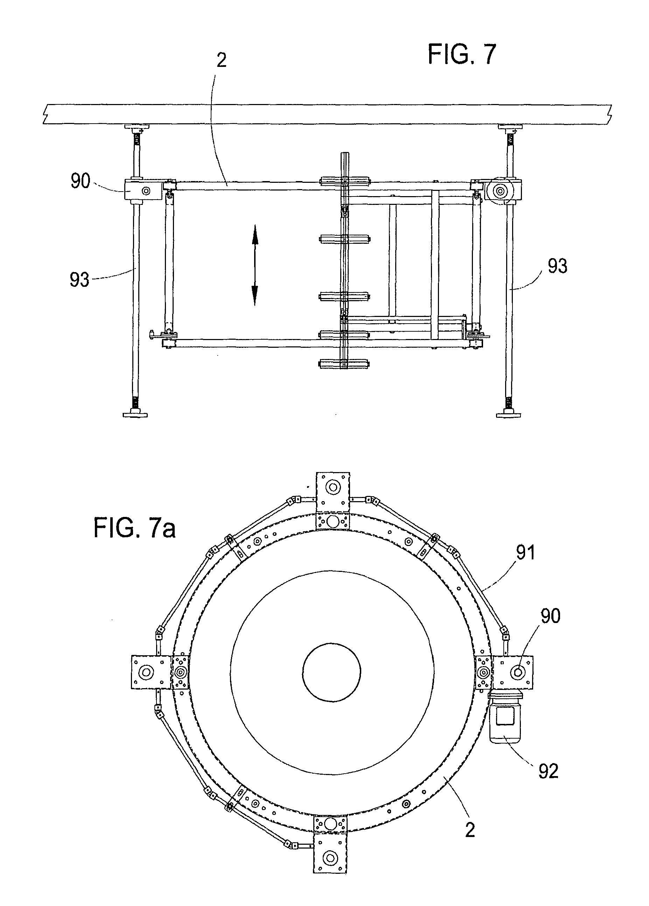

The bubble guide 1 integrated with the system of filtering described above can be moved vertically with means in themselves known for bubble guide, for example as illustrated in Figure 7 by means of a plurality of mechanical lifting jacks 90, attached on the upper ring of the supporting structure 2, which move along the trapezoidal screws 93. The trapezoidal screws 93 are static and the motion between motor 92 and the jacks 90 is transmitted by means of the mechanical shafts 91.

## Claims

1. Device (1) for guiding tubular plastic films produced by blown or bubble extrusion, comprising
a supporting structure (2) whereto one end of a plurality of mobile arms (3) is hinged, the second end thereof, held in contact with the bubble of extruded film, carries guide means (4) for said bubble of film, each mobile arm (3) consisting of an articulated quadrilateral comprising a quadrangular body (31) having one side hinged "flap-like" to the supporting structure (2), a tie rod (32) having one end hinged to the supporting structure (2) and a member (33), hinged to the other end of the tie rod (32) and to the side of the body (31) opposite that hinged to the supporting structure (2),
guide means (4) mounted on the quadrangular body (31) of each mobile arm (3) and suitable for being moved, parallel one to the other and tangentially to the bubble of extruded film, by said mobile arms (3), said guide means (4) comprising a plurality of guide members (41) mounted on respective supports (42) each one suitable for being mounted on the respective flap-like body (31) of the respective mobile arm (3),
means for the fine adjustment of the position of the guide means (4) with respect to the bubble of extruded film by varying the length of the tie rod (32),
**characterised in that** gas/fumes filtering means (50,52), movable with said mobile arm (3), are attached to each support (42) restrained to the respective flap-like body (31) of the respective mobile arm (3).

2. Device (1) according to claim 1 wherein said gas/fumes filtering means (50, 52) relating to each support (42) comprise a vertical filtering column (50), closed at one end and connected to a tube (60) at the other end.

3. Device (1) according to claim 1 or 2 wherein said filtering means (50,52) comprise respective aspiration means (52).

4. Device (1) according to claim 3 wherein said aspiration means (52) are attached to said filtering column (50) and placed on several levels in communication with said column (50).

5. Device (1) according to claim 3 or 4 wherein said aspiration means (52) of a respective filtering column (50) are formed by a plurality of aspirating members placed horizontally and rotated through a preset acute or obtuse angle with respect to said guide elements (41) attached to the respective support (42).

6. Device (1) according to any one of the preceding claims wherein each aspiration member (52) of said filtering means (50, 52) has a gas/fumes entry mouth placed in a direction which is substantially tangential or almost tangential with respect to the circumference of the bubble of the extruded film.

7. Device (1) according to any one of the preceding claims wherein said filtering means (51) further comprise removable helical brushes.

8. Device (1) according to any one of the preceding claims wherein the guide means (4) carried by the mobile arms (3) are interchangeable.

9. Device (1) according to any one of the preceding claims further comprising means suitable for moving it vertically and parallel to the bubble of extruded film.

10. Device (1) according to claim 9 wherein said moving means comprise a plurality of mechanical lifting jacks (90), attached on the upper ring of the supporting structure (2), suitable for moving along static trapezoidal screws (93), the transmission of the movement from the drive means (92) to the jacks (90) taking place by means of mechanical shafts (91).

## Patentansprüche

1. Vorrichtung (1) zum Führen schlauchförmiger Kunststofffolien, die durch Blasen oder Blasenextrusion hergestellt werden, umfassend
eine Trägerkonstruktion (2), an die ein Ende mehrerer beweglicher Arme (3) gelenkig befestigt ist, wobei das zweite Ende davon, das in Kontakt mit der Blase extrudierter Folie gehalten wird, Führungsvorrichtungen (4) für die Folienblase trägt, wobei jeder bewegliche Arm (3) aus einem gelenkartigen Viereck besteht, das einen viereckigen Körper (31), bei dem eine Seite "klappenähnlich" an der Trägerkonstruktion (2) gelenkig befestigt ist, eine Zugstange (32), bei der ein Ende an der Trägerkonstruktion (2) gelenkig befestigt ist, und einen Teil (33) umfasst, der an das andere Ende der Zugstange (32) und zur Seite des Körpers (31) derjenigen gegenüber gelenkig befestigt ist, die an der Trägerkonstruktion (2) gelenkig befestigt ist,
Führungsvorrichtungen (4), die an dem viereckigen Körper (31) jedes beweglichen Arms (3) montiert und geeignet sind, parallel zu einander und tangential zu der Blase extrudierter Folie durch die beweglichen Arme (3) bewegt zu werden, wobei die Führungsvorrichtungen (4) mehrere Führungsteile (41) umfassen, die auf entsprechenden Trägern (42) montiert sind, wobei jeder geeignet ist, an dem entsprechenden klappenähnlichen Körper (31) des entsprechenden beweglichen Arms (3) moniert zu werden,
Vorrichtungen für das Feineinstellen der Position der Führungsvorrichtungen (4) mit Bezug auf die Blase extrudierter Folie durch Variieren der Länge der Zugstange (32),
**dadurch gekennzeichnet, dass** Gas-/Dämpfefiltriervorrichtungen (50, 52), die mit dem beweglichen Arm (3) beweglich sind, an jedem Träger (42) befestigt sind, die an dem entsprechenden klappenähnlichen Körper (31) des entsprechenden beweglichen Arms (3) zurückgehalten werden.

2. Vorrichtung (1) nach Anspruch 1, wobei die Gas-/Dämpfefltriervorrichtungen (50, 52), die mit jedem Träger (42) in Beziehung stehen, eine senkrechte Filtriersäule (50) umfassen, die an einem Ende geschlossen und am anderen Ende an eine Röhre (60) angeschlossen ist.

3. Vorrichtung (1) nach Anspruch 1 oder 2, wobei die Filtriervowichtungen (50, 52) entsprechende Saugvorrichtungen (52) umfassen.

4. Vorrichtung (1) nach Anspruch 3, wobei die Saugvorrichtungen (52) an die Filtriersäule (50) angeschlossen sind und auf verschiedenen Niveaus mit der Säule (50) in Kommunikation gebracht werden.

5. Vorrichtung (1) nach Anspruch 3 oder 4, wobei die Saugvorrichtungen (52) einer entsprechenden Filtriersäule (50) durch mehrere Saugteile gebildet werden, die horizontal positioniert sind und durch einen voreingestellten spitzen oder stumpfen Winkel mit Bezug auf die Führungselemente (41), die an dem entsprechenden Träger (42) befestigt sind, rotiert werden.

6. Vorrichtung (1) nach einem der vorhergehenden Ansprüche, wobei jede Saugvorrichtung (52) der Filtriervorrichtungen (50, 52) einen Gas-/Dämpfeeinlassmund aufweist, der in einer Richtung positioniert ist, die mit Bezug auf den Umfang der Blase der extrudierten Folie im Wesentlichen tangential oder fast tangential ist.

7. Vorrichtung (1) nach einem der vorhergehenden Ansprüche, wobei die Filtriervorrichtung (51) des Weiteren entfernbare spiralenförmige Bürsten umfasst.

8. Vorrichtung (1) nach einem der vorhergehenden Ansprüche, wobei die Führungsvorrichtungen (4), die durch die beweglichen Arme (3) getragen werden, gegenseitig austauschbar sind.

9. Vorrichtung (1) nach einem der vorhergehenden Ansprüche, des Weiteren Vorrichtungen umfassend, die zum Bewegen derselben vertikal und parallel zu der Blase extrudierter Folie geeignet sind.

10. Vorrichtung (1) nach Anspruch 9, wobei die Bewegungsvorrichtungen mehrere mechanische Hebewinden (90) umfassen, die an dem oberen Ring der Trägerkonstruktion (2) befestigt und geeignet sind, sich statischen trapezförmigen Schrauben (93) entlang zu bewegen, wobei die Übertragung der Bewegung von der Antriebsvorrichtung (92) zu den Winden (90) durch mechanische Wellen (91) erfolgt.

## Revendications

1. Dispositif (1) pour guider des films plastiques tubulaires produits par extrusion soufflée ou bulle, comprenant
une structure de support (2) sur laquelle une extrémité d'une pluralité de bras mobiles (3) est articulée, la deuxième extrémité de celle-ci, maintenue en contact avec la bulle de film extrudé, porte un moyen de guidage (4) pour ladite bulle de film, chaque bras mobile (3) étant constitué d'un quadrilatère articulé comprenant un corps de quadrilatère (31) possédant un côté « ressemblant à un rabat » articulé sur la structure de support (2), une colonne (32) possédant une extrémité articulée sur la structure de support (2) et un membre (33), articulé sur l'autre extrémité de la colonne (32) et sur le côté du corps (31) à l'opposé de celle articulée sur la structure de support (2),
un moyen de guidage (4) monté sur le corps de quadrilatère (31) de chaque bras mobile (7) et adapté pour être déplacé, de façon parallèle l'une à l'autre et de façon tangentielle à la bulle de film extrudé, par lesdits bras mobiles (3), ledit moyen de guidage (4) comprenant une pluralité de membres de guidage (41) montés sur des supports respectifs (42) chacun étant approprié pour être monté sur le corps ressemblant à un rabat respectif (31) du bras mobile respectif (3),
un moyen pour ajuster finement la position du moyen de guidage (4) par rapport à la bulle de film extrudé en faisant varier la longueur de la colonne (32),
**caractérisé en ce que** des moyens de filtration de gaz/fumées (50, 52), amovibles avec ledit bras mobile (3), sont attachés à chaque support (42) retenus au corps ressemblant à un rabat respectif (31) du bras mobile respectif (3).

2. Dispositif (1) selon la revendication 1, dans lequel lesdits moyens de filtration de gaz/fumées (50, 52) concernant chaque support (42) comprennent une colonne de filtration verticale (50), fermée au niveau d'une extrémité et raccordée à un tube (60) au niveau de l'autre extrémité.

3. Dispositif (1) selon la revendication 1 ou la revendication 2, dans lequel lesdits moyens de filtration (50, 52) comprennent des moyens d'aspiration respectifs (52).

4. Dispositif (1) selon la revendication 3, dans lequel lesdits moyens d'aspiration (52) sont attachés à ladite colonne de filtration (50) et placés sur plusieurs niveaux en communication avec ladite colonne (50).

5. Dispositif (1) selon la revendication 3 ou la revendication 4, dans lequel lesdits moyens d'aspiration (52) d'une colonne de filtration respective (50) sont formés par une pluralité de membres d'aspiration placés de façon horizontale et mis en rotation selon un angle aigu ou obtus paramétré à l'avance par rapport auxdits éléments de guidage (41) attachés au support respectif (42).

6. Dispositif (1) selon l'une quelconque des revendications précédentes dans lequel chaque membre d'aspiration (52) desdits moyens de filtration (50, 52) possède une bouche d'admission des gaz/fumées placée dans un sens qui est essentiellement tangentiel ou pratiquement tangentiel à la circonférence de la bulle du film extrudé.

7. Dispositif (1) selon l'une quelconque des revendications précédentes, dans lequel lesdits moyens de filtration (51) comprennent en outre des brosses hélicoïdales amovibles.

8. Dispositif (1) selon l'une quelconque des revendications précédentes, dans lequel les moyens de guidage (4) portés par les bras mobiles (3) sont interchangeables.

9. Dispositif (1) selon l'une quelconque des revendications précédentes, comprenant en outre des moyens appropriés pour le déplacer verticalement et de façon parallèle à la bulle de film extrudé.

10. Dispositif (1) selon la revendication 9, dans lequel lesdits moyens de déplacement comprennent une pluralité de vérins de levage mécaniques (90), attachés sur l'anneau supérieur de la structure de support (2), appropriés pour se déplacer le long de vis trapézoïdales statiques (93), la transmission du mouvement des moyens d'entraînement (92) aux vérins (90) se produisant au moyen d'arbres mécaniques (91).
